# EUROPÄISCHE PATENTSCHRIFT

(11) **EP 2 079 889 B1**
(45) Veröffentlichungstag und Bekanntmachung des Hinweises auf die Patenterteilung: **16.02.2011**
(21) Anmeldenummer: 07820392.4
(22) Anmeldetag: 20.09.2007
(51) Int. Cl.: E04G 21/04, F16L 43/00

(54) **RUNDVERTEILER FÜR DICKSTOFFE, INSBESONDERE FÜR FLÜSSIGBETON**
CIRCULAR DISTRIBUTOR FOR THICK MATERIALS, IN PARTICULAR FOR LIQUID CONCRETE
REPARTITEUR CIRCULAIRE POUR SUBSTANCES EPAISSES ET EN PARTICULIER POUR BETON LIQUIDE

(30) Priorität: 19.10.2006 DE 102006049930
(43) Veröffentlichungstag der Anmeldung: 22.07.2009
(73) Patentinhaber: Putzmeister Engineering GmbH, 72631 Aichtal (DE)
(72) Erfinder: MÄCKLE, Raimund, 73730 Esslingen (DE); JUNGHANS, Karl-Heinz, 70794 Filderstadt (DE)
(74) Vertreter: Wolf, Eckhard
(86) Internationale Anmeldenummer: PCT/EP2007/059950
(87) Internationale Veröffentlichungsnummer: WO 2008/046710

(56) Entgegenhaltungen:
- WO-A-2004/099533
- DE-A1- 2 711 787
- DE-A1- 10 022 792
- DE-U1- 7 605 524
- JP-A- 62 268 469

## Beschreibung

Die Erfindung betrifft einen Rundverteiler für Dickstoffe, insbesondere für Flüssigbeton, mit einem auf einer Unterlage aufstellbaren Traggestell, mit einem an einem eingangsseitigen Ende mit den Dickstoffen unter Druck beaufschlagbaren gestellfesten Förderrohr, mit einem am ausgangsseitigen Ende des gestellfesten Förderrohrs angeschlossenen ersten Rohrkrümmer, mit einem an einer ersten Gelenkkupplung um eine Hochachse des Traggestells gegenüber dem ersten Rohrkrümmer verschwenkbaren zweiten Rohrkrümmer und einem mit dem zweiten Rohrkrümmer verbundenen Verteilerrohr, dessen ausgangsseitiges Ende eine Austrittsöffnung für die Dickstoffe aufweist (siehe DE 2711787 A1).

Rundverteiler der genannten Art werden zur Betoneinbringung überall dort eingesetzt, wo die direkte Verteilung mit Autobetonpumpen und stationären Verteilermasten an technische und wirtschaftliche Grenzen stößt. Dies ist beispielsweise bei Baustellen auf großen Flächen und Decken der Fall, die vom Verteilermast einer Autobetonpumpe nicht erreicht oder nicht voll bestrichen werden können. Der Rundverteiler wird am Rand oder unmittelbar auf einer zu betonierenden Unterlage aufgestellt und eingangsseitig über eine Schlauch- oder Rohrverbindung von einer Betonpumpe mit Flüssigbeton beaufschlagt. Das Verteilerrohr und gegebenenfalls das Förderrohr kann gegenüber einem Unterbau des Traggestells unter Beibehaltung einer vorgegebenen Höhe der Austrittsöffnung des Verteilerrohrs über die zu betonierende Fläche hinweg so verschwenkt werden, dass auch relativ große Betonierfelder mit geringem körperlichen Aufwand lückenlos bestrichen werden können. Für den Einsatz auf der Baustelle werden die Förderleitungen baustellengerecht mit Rohrkupplungen verbunden. Durch das Umsetzen des Rundverteilers mit einem Baukran lassen sich beliebig große Betonierfelder erschließen, wobei erschließen, wobei lediglich die Förderleitung bzw. der Förderschlauch verlängert oder verkürzt werden muss. Die geringen Abmessungen des Rundverteilers in Transportstellung erlauben den einfachen und platzsparenden Transport auf dem Ladegestell der Autobetonpumpe, auf einem LKW oder einem Anhänger.

Nicht ohne weiteres einsetzbar sind die Rundverteiler für Betonieraufgaben, bei denen die Einbringstellen für den Beton erheblich höher oder tiefer als die Aufstellebene des Traggestells liegen oder in der Höhe variieren. In einem solchen Fall hat man sich schon mit einem zusätzlichen Mastarm beholfen, über welchen ähnlich wie bei einem Verteilermast ein Förderrohr bis zu einem Endschlauch geführt ist. Diese Konstruktion ist jedoch baulich aufwendig und schwer handhabbar.

Ausgehend hiervon liegt der Erfindung die Aufgabe zugrunde, einen Rundverteiler der eingangs angegebenen Art zu entwickeln, der mit seiner Austrittsstelle neben großen Betonierflächen auch eine gewisse Höhe überwinden kann und dennoch einfach aufgebaut und leicht handhabbar ist.

Zur Lösung dieser Aufgabe werden die in den Patentansprüchen 1 und 19 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt vor allem der Gedanke zugrunde, dass das Verteilerrohr mit seiner Austrittsöffnung ohne einen zusätzlichen Mastarm sowohl über die durch die Unterlage des Rundverteilers definierte Ebene als auch senkrecht zu dieser verstellt werden kann, so dass Einbringstellen unterschiedlicher Höhe mit der Austrittsöffnung des Verteilerrohrs erreicht werden können. Dies wird gemäß der Erfindung dadurch ermöglicht, dass zwischen dem zweiten Rohrkrümmer und dem Verteilerrohr ein dritter Rohrkrümmer angeordnet ist, der über eine zweite Gelenkkupplung mit einer zur Hochachse senkrechten Horizontalachse schwenkbar am zweiten Rohrkrümmer und über eine starre Anschlusskupplung, die beispielsweise als Schalenkupplung oder als Schweißverbindung ausgebildet sein kann, am eingangsseitigen Ende des Verteilerrohrs angeschlossen ist. Im Bereich der zwischen dem gestellfesten Förderrohr und dem Verteilerrohr befindlichen Rohrkrümmer sind also zwei als Gelenkkupplungen ausgebildete Rohrkupplungen angeordnet, die ein Verschwenken des Verteilerrohrs um zueinander senkrechte Achsen erlauben. Ein weiteres Erfindungsmerkmal besteht darin, dass die zweite Gelenkkupplung eine zur Horizontalachse senkrechte Schwenkebene aufspannt, die die Schwenkebene der ersten Gelenkkupplung und die Anschlussebene der Anschlusskupplung zum Verteilerrohr jeweils senkrecht und mittig im Bereich der jeweiligen Kupplung schneidet.

Vorteilhafterweise ist zu diesem Zweck zwischen dem ersten und dem zweiten Rohrkrümmer ein mit der Ausgangsöffnung des ersten und der Eingangsöffnung des zweiten Rohrkrümmers ausgefluchtetes Geradrohrstück angeordnet, das mit einem der beiden Rohrkrümmer über die erste Gelenkkupplung verbunden und zweckmäßig an dem anderen Rohrkrümmer starr angeschlossen ist. Vorteilhafterweise ist das Geradrohrstück über die Gelenkkupplung mit dem ersten Rohrkrümmer und über eine starre Anschlusskupplung mit dem zweiten Rohrkrümmer verbunden.

Eine weitere bevorzugte Ausgestaltung der Erfindung sieht vor, dass die Eintrittsöffnung des zweiten Rohrkrümmers und die Austrittsöffnung des dritten Rohrkrümmers jeweils eine zur Öffnungsachse senkrechte Ebene aufspannen, die zu der durch die zweite Gelenkkupplung zwischen dem zweiten und dritten Rohrkrümmer aufgespannte Ebene senkrecht ausgerichtet ist. Dementsprechend schneidet die durch die zweite Gelenkkupplung zwischen dem zweiten und dritten Rohrkrümmer aufgespannte Ebene die Eintrittsöffnung des ersten und die Austrittsöffnung des zweiten Rohrkrümmers im Bereich der jeweiligen Öffnungsmitte. Auf den Rohrkrümmer bezogen bedeutet dies, dass der zweite und der dritte Rohrkrümmer jeweils eine Anschlussöffnung und eine hierzu senkrechte Gelenköffnung aufweist, wobei die Gelenköffnung jeweils eine die Anschlussöffnung im Bereich ihrer Mitte schneidende Ebene aufspannt.

Beim zweiten Rohrkrümmer ist zwischen der Gelenköffnung und der Anschlussöffnung ein Rohrbogen angeordnet, dessen Mittellinie in einem gelenkseitigen Abschnitt und in einem anschlussseitigen Abschnitt zueinander senkrechte, die Gelenköffnung und die Anschlussöffnung mittig schneidende Ebenen aufspannt. Hierbei ist der Rohrkrümmer zweckmäßig aus einem die Gelenköffnung aufweisenden 135°-Rohrbogen und einem gegenüber diesem um 90° gedrehten, die Anschlussöffnung aufweisenden 90°-Rohrbogen zusammengesetzt.

Im Falle des dritten Rohrkrümmers ist zwischen der Gelenköffnung und der Anschlussöffnung ein Rohrbogen angeordnet, dessen Mittellinie in einer die Gelenköffnung und die Anschlussöffnung mittig schneidenden Ebene verläuft. Zu diesem Zweck kann der betreffende Rohrkrümmer aus einem die Gelenköffnung aufweisenden 135°-Rohrbogen und einem hierzu gegenläufigen, in derselben Ebene liegenden, die Anschlussöffnung aufweisenden 45°-Rohrbogen zusammengesetzt sein.

Um die vorstehenden geometrischen Voraussetzungen zu erfühlen, können die beiden Rohrbögen jeweils durch ein Geradrohrstück miteinander verbunden werden. Außerdem kann der 135°-Rohrbogen aus einem 90°- und einem 45°-Rohrbogen beispielsweise durch Verschweißen zusammengesetzt werden.

Um das Verteilerrohr in einer vorgegebenen Höhe seiner Austrittsöffnung gegenüber dem Traggestell justieren zu können, ist vorteilhafterweise ein in axialem Abstand von der ersten Gelenkkupplung gestellfest angeordneter, mit der Hochachse im Bereich der ersten Gelenkkupplung ausgefluchteter Lagerzapfen sowie ein am Verteilerrohr im Abstand von der zweiten Gelenkkupplung angeordneter Halter vorgesehen. Außerdem ist ein mit seinem einen Ende am Halter fixiertes und mit seinem anderen Ende am Lagerzapfen um die betreffende Hochachse schwenkbar gelagertes, vorzugsweise als Ketten- oder Seilelement oder als hydraulische Zylinderkolben-Einheit ausgebildetes Spannglied vorgesehen, das in seiner Einspannlänge unter Anheben oder Absenken der Austrittsöffnung verstellt werden kann. Das Spannglied und das Verteilerrohr spannen dabei eine mit der Trennebene der zweiten Gelenkkupplung ausgefluchtete Ebene auf.

Um den Schwenkbereich des Rundverteilers zu vergrößern, wird gemäß einer bevorzugten Ausgestaltung der Erfindung vorgeschlagen, dass das Traggestell einen an einem Unterbau um eine Hochachse verdrehbar angeordneten, das Förderrohr tragenden Ausleger aufweist, und dass das eintrittsseitige Ende des Förderrohrs über eine zentrale Drehdurchführung mit einem unterbaufesten Beschickungsrohr verbunden ist.

Gegenstand der Erfindung sind außerdem die Rohrkrümmer, die zur Verwendung in einem Rundverteiler für Dickstoffe vorgesehen sind, und die eine am einen Ende angeordnete Anschlussöffnung und eine hierzu senkrechte, arm anderen Ende angeordnete Gelenköffnung aufweisen, wobei gemäß der Erfindung die Gelenköffnung eine die Ebene der Anschlussöffnung im Bereich der Öffnungsmitte schneidende Ebene aufspannt. Vorteilhafterweise ist bei einem der Rohrkrümmer zwischen der Gelenköffnung und der Anschlussöffnung ein Rohrbogen angeordnet, dessen Mittellinie in einer die Gelenköffnung und die Anschlussöffnung mittig schneidenden Ebene angeordnet ist. Bei einem zweiten Rohrkrümmer ist zwischen der Gelenköffnung und der Anschlussöffnung ein Rohrbogen angeordnet, dessen Mittellinie in einem ersten Abschnitt und in einem zweiten Abschnitt zwei zueinander senkrechte, die Gelenköffnung und die Anschlussöffnung mittig schneidende Ebenen aufspannt.

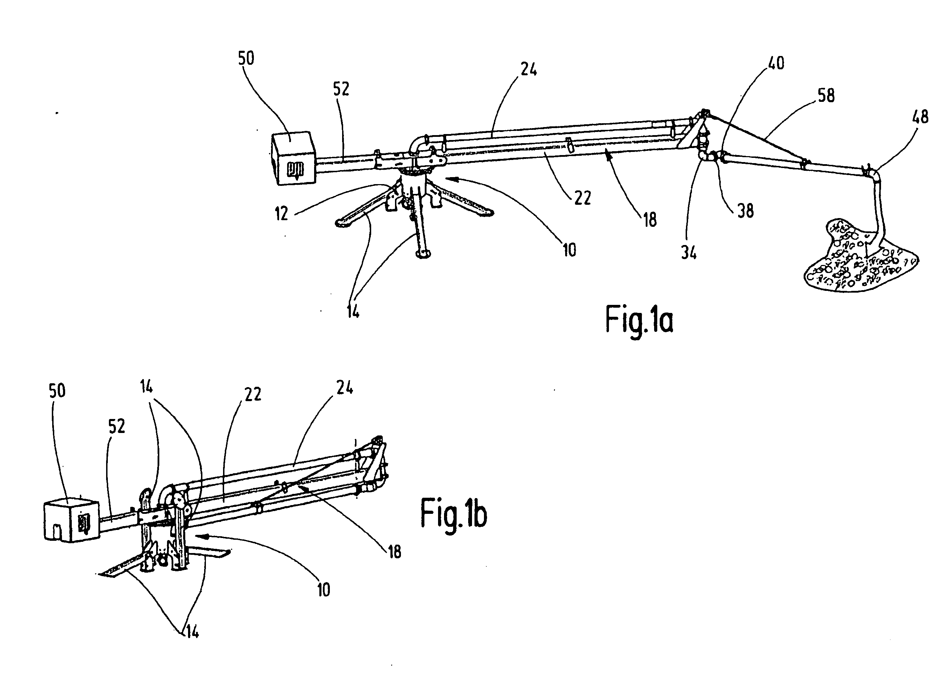

Im Folgenden wird die Erfindung anhand der in der Zeichnung in schematischer Weise dargestellten Ausführungsbeispiele näher erläutert. Es zeigen
- Fig. 1 a: einen Rundverteiler mit heb- und senkbarem Verteilerrohr in schaubildlicher Darstellung in einer Arbeitsstellung beim Betonie- ren von horizontalen Flächen;
- Fig. 1 b: den Rundverteiler nach Fig. 1 in schaubildlicher Darstellung in eingeklappter Transportstellung;
- Fig. 2a: eine Seitenansicht des Betonverteilers nach Fig. 1 a in Arbeitsstel- lung mit zwei verschiedenen Ausrichtungen des Verteilerrohrs;
- Fig. 2b: eine Draufsicht auf den Rundverteiler mit eingeschwenktem Ver- teilerrohr;
- Fig. 3a: und b zwei Seitenansichten des zweiten Rohrkrümmers des Rundverteilers nach Fig. 1 und 2;
- Fig. 4a: und b zwei Seitenansichten des dritten Rohrkrümmers des Rund- verteilers nach Fig. 1 und 2.

Der in der Zeichnung dargestellte Rundverteiler dient zur Einbringung von Flüssigbeton auf Baustellen, auf denen die direkte Verteilung mit Autobetonpumpen und stationären Verteilermasten an technische und wirtschaftliche Grenzen stößt. Der Rundverteiler kann mit seiner Austrittsstelle neben großen Betonierflächen auch eine gewisse Höhe ßen Betonierflächen auch eine gewisse Höhe überwinden und ist dennoch einfach aufgebaut und leicht handhabbar.

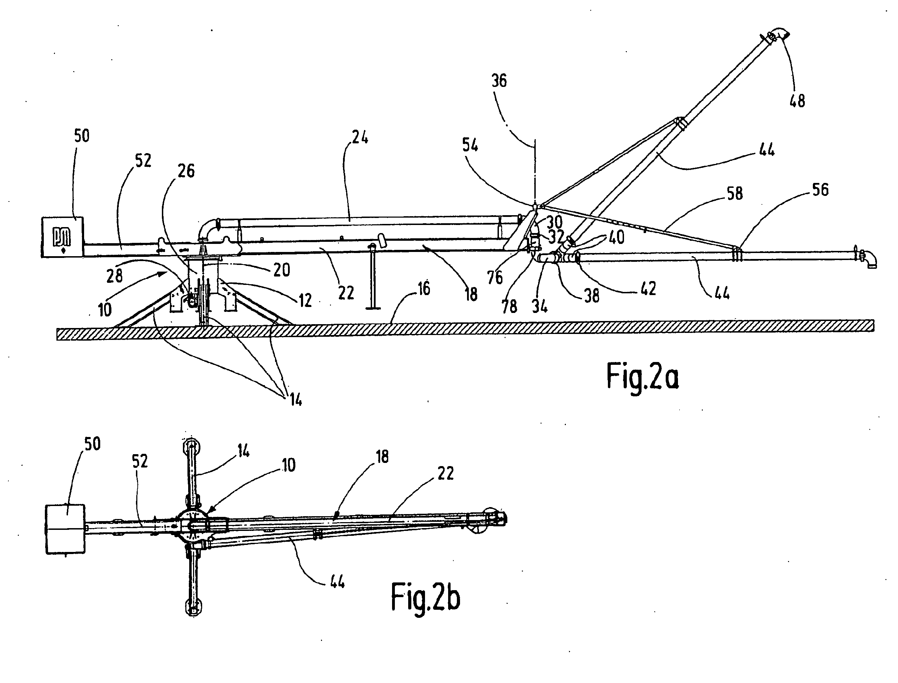

Der in Fig. 1 und 2 gezeigte Rundverteiler weist ein Traggestell 10 auf, dessen Unterbau 12 mit vier sternförmig angeordneten Schwenkbeinen 14 auf einer Unterlage 16 aufstellbar ist. Wie aus Fig. 1b zu ersehen ist, können die vier Schwenkbeine 14 paarweise nach oben und zur Seite geklappt werden, so dass der Rundverteiler ohne Demontage auf einem LKW oder in einem Container platzsparend transportiert werden kann.

Auf dem Unterbau 12 des Traggestells 10 ist ein zweiarmiger Ausleger 18 um eine vertikale Achse 20 um 360° drehbar gelagert. Der Ausleger 18 trägt an seinem einen Arm 22 ein Förderrohr 24, das eintrittsseitig über eine Drehdurchführung 26 zu einem unterbaufesten Beschickungsstutzen 28 hindurchgreift, und das über den Auslegerarm 22 zu einem an dessen Spitze angeordneten ersten 90°-Rohrkrümmer 30 geführt ist. An den ersten Rohrkrümmer 30 schließt über eine erste Gelenkkupplung 32 ein zweiter Rohrkrümmer 34 an, der über die erste Gelenkkupplung 32 gegenüber dem ersten Rohrkrümmer 30 um eine als Hochachse 36 ausgebildete Gelenkachse verschwenkbar ist.

Wie insbesondere aus Fig. 2a zu ersehen ist, ist zwischen dem ersten und dem zweiten Rohrkrümmer 30,34 ein mit der Ausgangsöffnung des ersten Rohrkrümmers 30 und der Eingangsöffnung 60 des zweiten Rohrkrümmers 34 ausgefluchtetes Rohrstück 76 angeordnet. Das Rohrstück 76 ist mit dem ersten Rohrkrümmer 30 über die erste Gelenkkupplung 32 und mit dem zweiten Rohrkrümmer 34 mittels einer Anschlusskupplung 78 starr verbunden. Alle Gelenk- und Anschlusskupplungen sind als Schalenkupplungen ausgebildet.

Austrittsseitig ist der zweite Rohrkrümmer 34 über eine zweite Gelenkkupplung 38 an einen dritten Rohrkrümmer 40 angeschlossen, der austrittsseitig über eine starre, als Schalenkupplung oder als Schweißverbindung ausgebildete Anschlusskupplung 42 fluchtend mit einem Verteilerrohr 44 verbunden ist. Der dritte Rohrkrümmer 40 ist zusammen mit dem Verteilerrohr 44 im Bereich der zweiten Gelenkkupplung 38 um eine zur Hochachse 36 senkrechte Horizontalachse 46 unter Heben und Senken der Austrittsöffnung 48 des Verteilerrohrs 44 verschwenkbar (vgl. Fig. 2a). Ein Gegengewicht 50 auf dem zweiten Auslegerarm 52, das aus mehreren Einzelgewichten zusammengesetzt sein kann, sorgt für einen Momentenausgleich des Auslegers im Bereich seines Auflagers am Unterbau 17.

Der Ausleger 18 weist am freien Ende des ersten Auslegerarms 22 einen in axialem Abstand von der ersten Gelenkkupplung 32 angeordneten Lagerzapfen 54 auf, während am Verteilerrohr 44 im Abstand von der zweiten Gelenkkupplung 38 ein Halter 56 angeordnet ist. Zwischen dem Lagerzapfen 54 und dem Halter 56 ist ein als Kettenelement oder als hydraulische Zylinder-Kolbeneinheit 58 ausgebildetes Spannglied eingespannt, das unter Verstellung des Anstellwinkels des Verteilerrohrs 44 verlängert oder verkürzt werden kann. An seinem rückwärtigen Ende ist das Spannglied 58 mit einer Lagerhülse 60 um die durch die Gelenkkupplung 32 verlaufende Hochachse drehbar am Lagerzapfen 54 gelagert. Auf diese Weise kann das Verteilerrohr 44 mit seiner Austrittsöffnung 48 auch in seiner angehobenen Stellung um die Hochachse 36 der ersten Gelenkkupplung 32 von der in Fig. 2a in die in Fig. 2b gezeigte Stellung gedreht werden, ohne dass die Höhe der Austrittsöffnung 48 verändert wird.

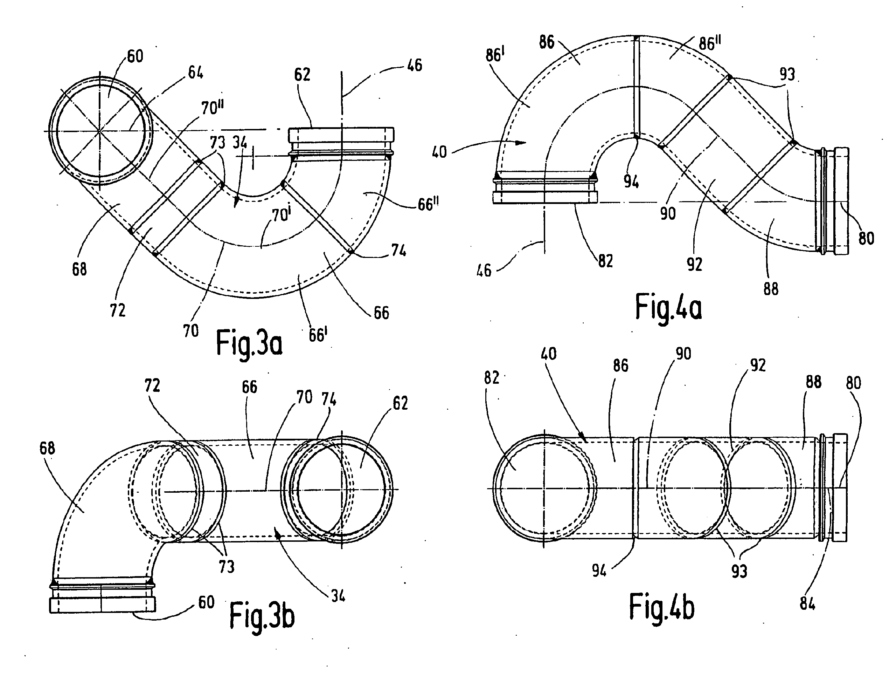

Das Verschwenken des Verteilerrohrs 44 um zwei zueinander senkrechte Gelenkachsen 36 und 46 im Bereich der Spitze des Auslegerarms 22 wird durch eine spezielle Formgebung des zweiten und dritten Rohrkrümmers ermöglicht (Fig. 3a und b und Fig. 4a und b).

Der zweite Rohrkrümmer 34 weist eine Anschlussöffnung 60 und eine hierzu senkrechte Gelenköffnung 62 auf, wobei die Gelenköffnung 62 eine die Anschlussöffnung 60 im Bereich ihrer Mitte schneidende Ebene 64 aufspannt. Zwischen der Gelenköffnung 62 und der Anschlussöffnung 60 des zweiten Rohrkrümmers 34 befindet sich eine Rohrbogengruppe 66,68, deren Mittellinie 70 in einem gelenkseitigen Abschnitt 70' und einem anschlussseitigen Abschnitt 70" zueinander senkrechte, die Gelenköffnung 62 und die Anschlussöffnung 60 mittig schneidende Ebenen aufspannt. Der Rohrkrümmer 34 ist dabei aus einem die Gelenköffnung 62 aufweisenden 135°-Bogen 66 und einem gegenüber diesem um 90° gedrehten, die Anschlussöffnung 60 aufweisenden 90°-Bogen 68 zusammengesetzt, wobei die beiden Rohrbogen 66,68 durch ein Geradrohrstück 72 an Schweißnähten 73 miteinander verbunden sind. Wie insbesondere aus Fig. 3a zu ersehen ist, ist der 135°-Rohrbogen 66 aus einem 90°-Rohrbogen 66' und einem 45°-Rohrbogen 66" an einer Schweißnaht zusammengesetzt.

Der dritte Rohrkrümmer 40 weist gemäß Fig. 4a und b eine Anschlussöffnung 80 und eine hierzu senkrechte Gelenköffnung 82 auf, wobei die Gelenköffnung 82 eine die Anschlussöffnung 80 im Bereich ihrer Mitte schneidende Ebene 84 aufspannt. Zwischen der Gelenköffnung 82 und der Anschlussöffnung 80 des dritten Rohrkrümmers 40 befindet sich eine Rohrbogengruppe 86,88, deren Mittellinie 90 in einer die Gelenköffnung 82 und die Anschlussöffnung 80 mittig schneidenden Ebene verläuft. Der dritte Rohrkrümmer 40 ist dabei aus einem die Gelenköffnung 82 aufweisenden 135°-Rohrbogen 86 und einem hierzu gegenläufigen, in derselben Ebene liegenden, die Anschlussöffnung 80 aufweisenden 45°-Rohrbogen zusammengesetzt. Die beiden Rohrbögen 86,88 sind durch ein Geradrohrstück 92 an Schweißnähten 93 miteinander verbunden. Der 135°-Rohrbogen 86 ist an einer Schweißnaht 94 aus einem 90°-Rohrbogen 86' und einem 45°-Rohrbogen 86" zusammengesetzt.

Zusammenfassend ist folgendes festzuhalten: Die Erfindung bezieht sich auf einen Rundverteiler für Dickstoffe, insbesondere für Flüssigbeton. Der Rundverteiler umfasst ein auf einer Unterlage 16 aufgestelltes Traggestell 10, ein an einem eingangsseitigen Ende 26 mit Dickstoffen unter Druck beaufschlagbares gestellfestes Förderrohr 24, einen am ausgangsseitigen Ende des gestellfesten Förderrohrs 24 angeschlossenen ersten Rohrkrümmer 30, einen an einer ersten Gelenkkupplung 32 um eine Hochachse 36 des Traggestells 10 gegenüber dem ersten Rohrkrümmer 30 verschwenkbaren zweiten Rohrkrümmer 34 und ein mit dem zweiten Rohrkrümmer 34 verbundenes Verteilerrohr 44, dessen ausgangsseitiges Ende eine Austrittsöffnung 48 für die Dickstoffe aufweist. Erfindungsgemäß ist zwischen dem zweiten Rohrkrümmer 34 und dem Verteilerrohr 44 ein dritter Rohrkrümmer 40 angeordnet, der über eine zweite Gelenkkupplung 38 mit einer zur Hochachse 36 senkrechten Horizontalachse 46 schwenkbar am zweiten Rohrkrümmer 34 und über eine Anschlusskupplung 42 am Verteilerrohr 44 angeschlossen ist, wobei die zweite Gelenkkupplung 38 eine zur Horizontalachse 46 senkrechte Ebene 64 aufspannt, die die Ebene des ersten Gelenkkupplung 32 und die Ebene des Anschlusskupplung 42 jeweils senkrecht und mittig im Bereich des jeweiligen Kupplung schneidet.

## Patentansprüche

1. Rundverteiler für Dickstoffe, insbesondere für Flüssigbeton, mit einem auf einer Unterlage (16) aufstellbaren Traggestell (10), mit einem an einem eingangsseitigen Ende (26) mit den Dickstoffen unter Druck beaufschlagbaren gestellfesten Förderrohr (24), mit einem am ausgangsseitigen Ende des gestellfesten Förderrohrs (24) angeschlossenen ersten Rohrkrümmer (30), mit einem an einer ersten Gelenkkupplung (32) um eine Hochachse (36) des Traggestells (10) gegenüber dem ersten Rohrkrümmer (30) verschwenkbaren zweiten Rohrkrümmer (34) und einem mit dem zweiten Rohrkrümmer (34) verbundenen Verteilerrohr (44), dessen ausgangsseitiges Ende eine Austrittsöffnung (48) für die Dickstoffe aufweist, **dadurch gekennzeichnet, dass** zwischen dem zweiten Rohrkrümmer (34) und dem Verteilerrohr (44) ein dritter Rohrkrümmer (40) angeordnet ist, der über eine zweite Gelenkkupplung (38) um eine zur Hochachse (36) senkrechte Horizontalachse (46) schwenkbar am zweiten Rohrkrümmer (34) und über eine Anschlusskupplung (42) am eingangsseitigen Ende des Verteilerrohrs (44) angeschlossen ist, und dass die zweite Gelenkkupplung (38) eine zur Horizontalachse (46) senkrechte Ebene (64) aufspannt, die die Ebene der ersten Gelenkkupplung (32) und die Ebene der Anschlusskupplung (42) jeweils senkrecht und mittig im Bereich der jeweiligen Kupplung schneidet.

2. Rundverteiler nach Anspruch 1, **dadurch gekennzeichnet, dass** die Anschlusskupplung (42) zwischen dem dritten Rohrkrümmer (40) und dem Verteilerrohr (44) als Schweißverbindung ausgebildet ist.

3. Rundverteiler nach Anspruch 1 oder 2, **dadurch gekennzeichnet, dass** zwischen dem ersten und dem zweiten Rohrkrümmer (30,34) ein mit der Ausgangsöffnung des ersten Rohrkrümmers (30) und der Anschlussöffnung (60) des zweiten Rohrkrümmers (34) ausgefluchtetes Geradrohrstück (76) angeordnet ist, das mit einem der beiden Rohrkrümmer (30) über die erste Gelenkkupplung (32) verbunden ist.

4. Rundverteiler nach Anspruch 3, **dadurch gekennzeichnet, dass** das Geradrohrstück (76) an dem zweiten Rohrkrümmer (34) drehbar oder starr angeschlossen ist.

5. Rundverteiler nach Anspruch 3 oder 4, **dadurch gekennzeichnet, dass** das Geradrohrstück (76) über die erste Gelenkkupplung (32) mit dem ersten Rohrkrümmer (30) und über eine starre Anschlusskupplung (78) mit dem zweiten Rohrkrümmer (34) verbunden ist.

6. Rundverteiler nach einem der Ansprüche 1 bis 5, **dadurch gekennzeichnet, dass** der zweite und der dritte Rohrkrümmer (34, 40) jeweils eine Anschlussöffnung (60,80) und eine hierzu senkrechte Gelenköffnung (62,82) aufweisen, wobei die Gelenköffnung (62,82) jeweils eine die Anschlussöffnung (60,80) im Bereich ihrer Mitte schneidende Ebene aufspannt.

7. Rundverteiler nach Anspruch 6, **dadurch gekennzeichnet, dass** zwischen der Gelenköffnung (82) und der Anschlussöffnung (80) des dritten Rohrkrümmers (40) eine Rohrbogengruppe (86,88) angeordnet ist, deren Mittellinie (90) in einer die Gelenköffnung (82) und die Anschlussöffnung (80) mittig schneidenden Ebene verläuft.

8. Rundverteiler nach Anspruch 6 oder 7, **dadurch gekennzeichnet, dass** die Anschlussöffnung (60) des zweiten Rohrkrümmers (34) und die Anschlussöffnung (80) des dritten Rohrkrümmers (40) jeweils eine Ebene aufspannen, die zu der durch die zweite Gelenkkupplung (38) zwischen dem zweiten und dritten Rohrkrümmer (34, 40) aufgespannte Ebene senkrecht ausgerichtet sind.

9. Rundverteiler nach einem der Ansprüche 6 bis 8, **dadurch gekennzeichnet, dass** die durch die zweite Gelenkkupplung (38) zwischen dem zweiten und dritten Rohrkrümmer (34, 40) aufgespannte Ebene die Anschlussöffnung (60) des zweiten Rohrkrümmers (34) und die Anschlussöffnung (80) des dritten Rohrkrümmers (40) im Bereich der jeweiligen Öffnungsmitte schneidet.

10. Rundverteiler nach einem der Ansprüche 6 bis 9, **dadurch gekennzeichnet, dass** der dritte Rohrkrümmer (40) aus einem die Gelenköffnung (82) aufweisenden 135°-Rohrbogen (86) und einem hierzu gegenläufigen, in derselben Ebene liegenden, die Anschlussöffnung (80) aufweisenden 45°-Rohrbogen (88) zusammengesetzt ist.

11. Rundverteiler nach einem der Ansprüche 6 bis 9, **dadurch gekennzeichnet, dass** zwischen der Gelenköffnung (62) und der Anschlussöffnung (60) des zweiten Rohrkrümmers (34) eine Rohrbogengruppe (66,68) angeordnet ist, deren Mittellinie (70) in einem gelenkseitigen Abschnitt (70') und in einem anschlussseitigen Abschnitt (70") zueinander senkrechte, die Gelenköffnung (62) und die Anschlussöffnung (60) mittig schneidende Ebenen aufspannt.

12. Rundverteiler nach einem der Ansprüche 6 bis 11, **dadurch gekennzeichnet, dass** der zweite Rohrkrümmer (34) aus einem die Gelenköffnung (62) aufweisenden 135°-Rohrbogen (66) und einem gegenüber diesem um 90° gedrehten, die Anschlussöffnung (60) aufweisenden 90°-Rohrbogen (68) zusammengesetzt ist.

13. Rundverteiler nach einem der Ansprüche 6 bis 12, **dadurch gekennzeichnet, dass** die beiden Rohrbögen (66,68,86,88) durch ein Geradrohrstück (72,92) miteinander verbunden sind.

14. Rundverteiler nach einem der Ansprüche 10 bis 13, **dadurch gekennzeichnet, dass** der 135°-Rohrbogen (86) aus einem 90°- und einem 45°-Rohrbogen (86',86") zusammengesetzt ist.

15. Rundverteiler nach einem der Ansprüche 1 bis 14, **gekennzeichnet durch** einen in axialem Abstand von der ersten Gelenkkupplung (32) gestellfest angeordneten, mit der Hochachse (36) im Bereich der ersten Gelenkkupplung (32) ausgefluchteten Lagerzapfen (54), einen am Verteilerrohr (44) im Abstand von der zweiten Gelenkkupplung (38) angeordneten Halter (56) und ein mit seinem einen Ende am Halter (56) fixiertes und mit seinem anderen Ende am Lagerzapfen (54) um die Hochachse (36) schwenkbar gelagertes Spannglied (58), das in seiner Einspannlänge verstellbar ist.

16. Rundverteiler nach Anspruch 15, **dadurch gekennzeichnet, dass** das Spannglied (58) als hydraulische Zylinderkolbeneinheit oder als Ketten- oder Seilelement ausgebildet ist.

17. Rundverteiler nach Anspruch 16, **dadurch gekennzeichnet, dass** das Spannglied (58) und das Verteilerrohr (44) eine mit der Ebene der zweiten Gelenkkupplung (38) ausgefluchtete Ebene aufspannen.

18. Rundverteiler nach einem der Ansprüche 1 bis 17, **dadurch gekennzeichnet, dass** das Traggestell (10) einen an einem Unterbau (12) um eine Hochachse (20) verdrehbar angeordneten, das Förderrohr (24) tragenden Ausleger (18) aufweist, und dass das eintrittsseitige Ende des Förderrohrs (24) über eine zentrale Drehdurchführung (26) mit einem unterbaufesten Beschickungsrohr (28) verbunden ist.

19. Rohrkrümmer zur Verwendung in einem Rundverteiler für Dickstoffe mit einer am einen Ende angeordneten Anschlussöffnung (60,80) und einer hierzu senkrechten, am anderen Ende angeordneten Gelenköffnung (62,82), **dadurch gekennzeichnet, dass** die Gelenköffnung (62,82) eine die Ebene der Anschlussöffnung (60,80) im Bereich der Öffnungsmitte schneidende Ebene aufspannt.

20. Rohrkrümmer nach Anspruch 19, **dadurch gekennzeichnet, dass** zwischen der Gelenköffnung (82) und der Anschlussöffnung (80) eine Rohrbogengruppe (86,88) angeordnet ist, deren Mittellinie (90) in einer die Gelenköffnung (82) und die Anschlussöffnung (80) mittig schneidenden Ebene (84) angeordnet ist.

21. Rohrkrümmer nach Anspruch 19 oder 20, **gekennzeichnet durch** einen die Gelenköffnung (82) aufweisenden 135°-Rohrbogen (86) und einen hierzu gegenläufigen, die Anschlussöffnung (80) aufweisenden 45°-Rohrbogen (88).

22. Rohrkrümmer nach Anspruch 21, **dadurch gekennzeichnet, dass** zwischen der Gelenköffnung (62) und der Anschlussöffnung (60) eine Rohrbogengruppe (66,68) angeordnet ist, deren Mittellinie (70) in einem ersten Abschnitt (70") und einem zweiten Abschnitt (70') zwei zueinander senkrechte, die Gelenköffnung (62) und die Anschlussöffnung (60) mittig schneidende Ebenen aufspannt.

23. Rohrkrümmer nach Anspruch 19 oder 22, **gekennzeichnet durch** einen die Gelenköffnung (62) aufweisenden 135°-Rohrbogen (66) und einen gegenüber diesem um 90° gedrehten, die Anschlussöffnung (60) aufweisenden 90°-Rohrbogen (68).

24. Rohrkrümmer nach einem der Ansprüche 19 bis 23, **dadurch gekennzeichnet, dass** die beiden Rohrbögen (66,68;86,88) durch ein Geradrohrstück (72,92) miteinander verbunden sind.

25. Rohrkrümmer nach einem der Ansprüche 19 bis 24, **dadurch gekennzeichnet, dass** der 135°-Rohrbogen (66,86) aus einem 90°- und einem 45°-Rohrbogen (66',66";86',86") zusammengesetzt ist.

## Claims

1. Circular distributor for thick substances, particularly for liquid concrete, having a support frame (10) that can be set up on a base (16), having a conveyor pipe (24) fixed in place on the frame, to which the thick substances can be applied under pressure, at an inlet-side end (26), having a first pipe bend (30) connected to the outlet-side end of the conveyor pipe (24) fixed in place on the frame, having a second pipe bend (34) that can be pivoted relative to the first pipe bend (30), at a first articulation coupling (32), about a vertical axis (36) of the support frame (10), and a distributor pipe (44) connected with the second pipe bend (34), whose outlet-side end has an exit opening (48) for the thick substances, **characterized in that** a third pipe bend (40) is disposed between the second pipe bend (34) and the distributor pipe (44), and is connected to the second pipe bend (34) by way of a second articulation coupling (38), so as to pivot about a horizontal axis (46) that is perpendicular to the vertical axis (36), and to the inlet-side end of the distributor pipe (44), by way of a connection coupling (42), and that the second articulation coupling (38) spans a plane (64) that is perpendicular to the horizontal axis (46), and intersects the plane of the first articulation coupling (32) and the plane of the connection coupling (42) in perpendicular and centered manner, in each instance, in the region of the coupling, in each instance.

2. Circular distributor according to claim 1, **characterized in that** the connection coupling (42) is configured as a weld connection between the third pipe bend (40) and the distributor pipe (44).

3. Circular distributor according to claim 1 or 2, **characterized in that** a straight pipe piece (76) aligned with the outlet opening of the first pipe bend (30) and the connection opening (60) of the second pipe bend (34) is disposed between the first and the second pipe bend (30, 34), which piece is connected with one of the two pipe bends (30) by way of the first articulation coupling (32).

4. Circular distributor according to claim 3, **characterized in that** the straight pipe piece (76) is connected with the second pipe bend (34), so as to rotate or rigidly.

5. Circular distributor according to claim 3 or 4, **characterized in that** the straight pipe piece (76) is connected with the first pipe bend (30) by way of the first articulation coupling (32), and with the second pipe bend (34) by way of a rigid connection coupling (78).

6. Circular distributor according to one of claims 1 to 5, **characterized in that** the second and the third pipe bend (34, 40) each have a connection opening (60, 80) and an articulation opening (62, 82) perpendicular to the latter, whereby the articulation opening (62, 82) spans a plane that intersects the connection opening (60, 80) in the region of its center, in each instance.

7. Circular distributor according to claim 6, **characterized in that** a pipe elbow group (86, 88) is disposed between the articulation opening (82) and the connection opening (80) of the third pipe bend (40), the center line (90) of which runs in a plane that intersects the articulation opening (82) and the connection opening (80) in the center.

8. Circular distributor according to claim 6 or 7, **characterized in that** the connection opening (60) of the second pipe bend (34) and the connection opening (80) of the third pipe bend (40) each span a plane that is oriented perpendicular to the plane spanned through the second articulation coupling (38), between the second and third pipe bend (34, 40).

9. Circular distributor according to one of claims 6 to 8, **characterized in that** the plane spanned through the second articulation coupling (38), between the second and third pipe bend (34, 40), intersects the connection opening (60) of the second pipe bend (34) and the connection opening (80) of the third pipe bend (40), in the region of the opening center, in each instance.

10. Circular distributor according to one of claims 6 to 9, **characterized in that** the third pipe bend (40) is composed of a 135° pipe elbow (86) that has the articulation opening (82), and a 45° pipe elbow (88) that has the connection opening (80), which lies in the same plane and runs in the opposite direction.

11. Circular distributor according to one of claims 6 to 9, **characterized in that** a pipe elbow group (66, 68), the center line (70) of which spans planes that lie perpendicular to one another and intersect the articulation opening (62) and the connection opening (60) in the center, in an articulation-side section (70') and a connection-side section (70"), is situated between the articulation opening (62) and the connection opening (60) of the second pipe bend (34).

12. Circular distributor according to one of claims 6 to 11, **characterized in that** the second pipe bend (34) is composed of a 135° pipe elbow (66) that has the articulation opening (62), and a 90° pipe elbow (68) that has the connection opening (60), and is rotated by 90° relative to the former.

13. Circular distributor according to one of claims 6 to 12, **characterized in that** the two pipe elbows (66, 68, 86, 88) are connected with one another by means of a straight pipe piece (72, 92).

14. Circular distributor according to one of claims 10 to 13, **characterized in that** the 135° pipe elbow (86) is composed of a 90° pipe elbow and a 45° pipe elbow (86', 86").

15. Circular distributor according to one of claims 1 to 14, **characterized by** a bearing journal (54) disposed at an axial distance from the first articulation coupling (32), disposed fixed on the frame, aligned with the vertical axis (36) in the region of the first articulation coupling (32), a holder (56) disposed on the distributor pipe (44), at a distance from the second articulation coupling (38), and a bracing element (58) fixed in place on the holder (56) with its one end, and mounted on the bearing journal (54) with its other end, so as to pivot about the vertical axis (36), which element can be adjusted in terms of its tensioning length.

16. Circular distributor according to claim 15, **characterized in that** the bracing element (58) is configured as a hydraulic cylinder/piston unit or as a chain or cable element.

17. Circular distributor according to claim 16, **characterized in that** the bracing element (58) and the distributor pipe (44) span a plane that aligns with the plane of the second articulation coupling (38).

18. Circular distributor according to one of claims 1 to 17, **characterized in that** the support frame (10) has a boom (18) that carries the conveyor pipe (24), disposed to rotate about a vertical axis (20) on the substructure (12), and that the entry-side end of the conveyor pipe (24) is connected with a charging pipe (28) fixed in place on the substructure, by way of a central rotating pass-through (26).

19. Pipe bend for use in a circular distributor for thick substances, having a connection opening (60, 80) disposed at one end, and an articulation opening (62, 82) disposed at the other end, perpendicular to the former, **characterized in that** the articulation opening (62, 82) spans a plane that intersects the plane of the connection opening (60, 80) in the region of the center of the opening.

20. Pipe bend according to claim 19, **characterized in that** a pipe elbow group (86, 88) is disposed between the articulation opening (82) and the connection opening (80), the center line (90) of which is disposed in a plane (84) that intersects the articulation opening (82) and the connection opening (80) in the center.

21. Pipe bend according to claim 19 or 20, **characterized by** a 135° pipe elbow (86) that has the articulation opening (82), and a 45° pipe elbow (88) that has the connection opening (80), and runs in the opposite direction.

22. Pipe bend according to claim 21, **characterized in that** a pipe elbow group (66, 68) is disposed between the articulation opening (62) and the connection opening (60), the center line (70) of which spans two planes that are perpendicular to one another and intersect the articulation opening (62) and the connection opening (60) in the center, in a first section (70") and a second section (70').

23. Pipe bend according to claim 19 or 22, **characterized by** a 135° pipe elbow (66) that has the articulation opening (62), and a 90° pipe elbow (68) that has the connection opening (60), and is rotated by 90° relative to the former.

24. Pipe bend according to one of claims 19 to 23, **characterized in that** the two pipe elbows (66, 68; 86, 88) are connected with one another by means of a straight pipe piece (72, 92).

25. Pipe bend according to one of claims 19 to 24, **characterized in that** the 135° pipe elbow (66, 86) is composed of a 90° pipe elbow and a 45° pipe elbow (66', 66"; 86' 86").

## Revendications

1. Répartiteur circulaire pour substances épaisses, en particulier pour du béton liquide, comprenant un châssis de support (10) pouvant être dressé sur une structure sous-jacente (16) ; une tubulure de convoyage (24) assujettie audit châssis et pouvant être sollicitée par lesdites substances épaisses, sous pression, à une extrémité (26) située côté entrée ; un premier coude tubulaire (30), raccordé à l'extrémité située côté sortie de ladite tubulure de convoyage (24) assujettie au châssis ; un deuxième coude tubulaire (34) pouvant pivoter par rapport audit premier coude tubulaire (30), sur un premier accouplement articulé (32), autour d'un axe vertical (36) dudit châssis de support (10) ; et une tubulure de répartition (44) reliée audit deuxième coude tubulaire (34) et dont l'extrémité, située côté sortie, comporte un orifice (48) de décharge desdites substances épaisses, **caractérisé par le fait qu'**un troisième coude tubulaire (40), interposé entre le deuxième coude tubulaire (34) et la tubulure de répartition (44), est raccordé audit deuxième coude tubulaire (34) par l'intermédiaire d'un second accouplement articulé (38), avec faculté de pivotement autour d'un axe horizontal (46) perpendiculaire à l'axe vertical (36), et est raccordé à l'extrémité située côté entrée de ladite tubulure de répartition (44), par l'intermédiaire d'un accouplement de raccordement (42) ; et **par le fait que** ledit second accouplement articulé (38) couvre l'étendue d'un plan (64) qui est perpendiculaire audit axe horizontal (46) et est sécant au plan du premier accouplement articulé (32) et au plan dudit accouplement de raccordement (42), suivant un tracé respectivement perpendiculaire passant par le centre de la région de l'accouplement considéré.

2. Répartiteur circulaire selon la revendication 1, **caractérisé par le fait que** l'accouplement de raccordement (42) est réalisé sous la forme d'une liaison soudée entre le troisième coude tubulaire (40) et la tubulure de répartition (44).

3. Répartiteur circulaire selon la revendication 1 ou 2, **caractérisé par le fait qu'**une pièce tubulaire rectiligne (76) interposée entre les premier et deuxième coudes tubulaires (30, 34), alignée avec l'orifice de sortie dudit premier coude tubulaire (30) et avec l'orifice de raccordement (60) dudit deuxième coude tubulaire (34), est reliée à l'un (30) des deux coudes tubulaires par l'intermédiaire du premier accouplement articulé (32).

4. Répartiteur circulaire selon la revendication 3, **caractérisé par le fait que** la pièce tubulaire rectiligne (76) est raccordée au deuxième coude tubulaire (34) de manière rotative ou rigide.

5. Répartiteur circulaire selon la revendication 3 ou 4, **caractérisé par le fait que** la pièce tubulaire rectiligne (76) est reliée au premier coude tubulaire (30) par l'intermédiaire du premier accouplement articulé (32), et au deuxième coude tubulaire (34) par l'intermédiaire d'un accouplement rigide de raccordement (78).

6. Répartiteur circulaire selon l'une des revendications 1 à 5, **caractérisé par le fait que** les deuxième et troisième coudes tubulaires (34, 40) sont pourvus, respectivement, d'un orifice de raccordement (60, 80) et d'un orifice d'articulation (62, 82) perpendiculaire à ce dernier, ledit orifice d'articulation (62, 82) couvrant l'étendue respective d'un plan qui coupe ledit orifice de raccordement (60, 80) dans la région de son centre.

7. Répartiteur circulaire selon la revendication 6, **caractérisé par le fait qu'**un groupe de cintres tubulaires (86, 88) est interposé entre l'orifice d'articulation (82) et l'orifice de raccordement (80) du troisième coude tubulaire (40), la ligne médiane (90) dudit groupe s'étendant dans un plan qui coupe centralement ledit orifice d'articulation (82) et ledit orifice de raccordement (80).

8. Répartiteur circulaire selon la revendication 6 ou 7, **caractérisé par le fait que** l'orifice de raccordement (60) du deuxième coude tubulaire (34) et l'orifice de raccordement (80) du troisième coude tubulaire (40) couvrent, à chaque fois, l'étendue d'un plan orienté perpendiculairement au plan dont l'étendue est couverte, par le second accouplement articulé (38), entre lesdits deuxième et troisième coudes tubulaires (34, 40).

9. Répartiteur circulaire selon l'une des revendications 6 à 8, **caractérisé par le fait que** le plan, dont l'étendue est couverte par le second accouplement articulé (38) entre les deuxième et troisième coudes tubulaires (34, 40), coupe l'orifice de raccordement (60) dudit deuxième coude tubulaire (34) et l'orifice de raccordement (80) dudit troisième coude tubulaire (40) dans la région du centre de l'orifice considéré.

10. Répartiteur circulaire selon l'une des revendications 6 à 9, **caractérisé par le fait que** le troisième coude tubulaire (40) est composé d'un cintre tubulaire (86) à 135°, présentant l'orifice d'articulation (82), et d'un cintre tubulaire (88) à 45° qui présente l'orifice de raccordement (80) et est situé dans le même plan que le cintre précité, en sens inverse duquel il pointe.

11. Répartiteur circulaire selon l'une des revendications 6 à 9, **caractérisé par le fait qu'**un groupe de cintres tubulaires (66, 68) est interposé entre l'orifice d'articulation (62) et l'orifice de raccordement (60) du deuxième coude tubulaire (34), la ligne médiane (70) dudit groupe couvrant, dans une région (70') située côté articulation et dans une région (70") située côté raccordement, l'étendue de plans mutuellement perpendiculaires qui coupent, centralement, ledit orifice d'articulation (62) et ledit orifice de raccordement (60).

12. Répartiteur circulaire selon l'une des revendications 6 à 11, **caractérisé par le fait que** le deuxième coude tubulaire (34) est composé d'un cintre tubulaire (66) à 135°, présentant l'orifice d'articulation (62), et d'un cintre tubulaire (68) à 90° qui présente l'orifice de raccordement (60) et est décalé, de 90°, vis-à-vis du cintre précité.

13. Répartiteur circulaire selon l'une des revendications 6 à 12, **caractérisé par le fait que** les deux cintres tubulaires (66, 68 ; 86, 88) sont reliés l'un à l'autre par l'intermédiaire d'une pièce tubulaire rectiligne (72 ; 92).

14. Répartiteur circulaire selon l'une des revendications 10 à 13, **caractérisé par le fait que** le cintre tubulaire (86) à 135° est composé de cintres tubulaires respectifs (86', 86") à 90°, et à 45°.

15. Répartiteur circulaire selon l'une des revendications 1 à 14, **caractérisé par** un tenon de montage (54) qui occupe une position fixe sur le châssis, à distance axiale du premier accouplement articulé (32), et coïncide avec l'axe vertical (36) dans la région dudit premier accouplement articulé (32) ; par un support (56) disposé sur la tubulure de répartition (44), à distance du second accouplement articulé (38) ; et par un organe de serrage (58) à longueur d'enserrement réglable, qui est verrouillé à demeure sur ledit support (56) par l'une de ses extrémités, et est calé sur ledit tenon de montage (54) par son autre extrémité, avec faculté de pivotement autour dudit axe vertical (36).

16. Répartiteur circulaire selon la revendication 15, **caractérisé par le fait que** l'organe de serrage (58) est réalisé sous la forme d'un vérin hydraulique, voire d'un élément à chaîne ou à câble.

17. Répartiteur circulaire selon la revendication 16, **caractérisé par le fait que** l'organe de serrage (58) et la tubulure de répartition (44) couvrent l'étendue d'un plan coïncidant avec le plan du second accouplement articulé (38).

18. Répartiteur circulaire selon l'une des revendications 1 à 17, **caractérisé par le fait que** le châssis de support (10) présente un bras (18) en porte-à-faux qui supporte la tubulure de convoyage (24) et est agencé, sur une structure d'embase (12), avec faculté de rotation autour d'un axe vertical (20) ; et **par le fait que** l'extrémité située côté entrée de ladite tubulure de convoyage (24) est reliée, par l'intermédiaire d'un passage tournant central (26), à une tubulure d'alimentation (28) faisant rigidement corps avec ladite structure d'embase.

19. Coude tubulaire dévolu à l'utilisation dans un répartiteur circulaire pour substances épaisses, comprenant un orifice de raccordement (60, 80) situé à l'une des extrémités et un orifice d'articulation (62, 82) perpendiculaire à l'orifice précité, et situé à l'autre extrémité, **caractérisé par le fait que** l'orifice d'articulation (62, 82) couvre l'étendue d'un plan qui coupe l'orifice de raccordement (60, 80) dans la région du centre dudit orifice.

20. Coude tubulaire selon la revendication 19, **caractérisé par le fait qu'**un groupe de cintres tubulaires (86, 88) est interposé entre l'orifice d'articulation (82) et l'orifice de raccordement (80), la ligne médiane (90) dudit groupe étant située dans un plan qui coupe, centralement, ledit orifice d'articulation (82) et ledit orifice de raccordement (80).

21. Coude tubulaire selon la revendication 19 ou 20, **caractérisé par** un cintre tubulaire (86) à 135°, muni de l'orifice d'articulation (82), et par un cintre tubulaire (88) à 45° doté de l'orifice de raccordement (80), et pointant en sens inverse du cintre précité.

22. Coude tubulaire selon la revendication 21, **caractérisé par le fait qu'**un groupe de cintres tubulaires (66, 68) est interposé entre l'orifice d'articulation (62) et l'orifice de raccordement (60), la ligne médiane (70) dudit groupe couvrant, dans une première région (70") et dans une seconde région (70'), l'étendue de deux plans mutuellement perpendiculaires qui coupent, centralement, ledit orifice d'articulation (62) et ledit orifice de raccordement (60).

23. Coude tubulaire selon la revendication 19 ou 22, **caractérisé par** un cintre tubulaire (66) à 135°, présentant l'orifice d'articulation (62), et par un cintre tubulaire (68) à 90° qui présente l'orifice de raccordement (60) et est décalé, de 90°, vis-à-vis du cintre précité.

24. Coude tubulaire selon l'une des revendications 19 à 23, **caractérisé par le fait que** les deux cintres tubulaires (66, 68 ; 86, 88) sont reliés l'un à l'autre par l'intermédiaire d'une pièce tubulaire rectiligne (72 ; 92).

25. Coude tubulaire selon l'une des revendications 19 à 24, **caractérisé par le fait que** le cintre tubulaire (66 ; 86) à 135° est composé de cintres tubulaires respectifs (66', 66" ; 86', 86") à 90°, et à 45°.
